# EUROPÄISCHE PATENTSCHRIFT

(11) **EP 2 803 294 B1**
(45) Veröffentlichungstag und Bekanntmachung des Hinweises auf die Patenterteilung: **14.12.2016**
(21) Anmeldenummer: 14000692.5
(22) Anmeldetag: 26.02.2014
(51) Int. Cl.: A46B 9/04, A46D 3/00, B29C 45/14, B29C 45/26, B29C 33/38, B29L 31/42, B29C 33/40, B29C 67/00

(54) **FORMEINSATZ FÜR EINE SPRITZGIESSFORM**
MOULD INSERT FOR AN INJECTION MOULD
INSERT DE MOULE POUR UN MOULE D'INJECTION

(30) Priorität: 16.05.2013 DE 102013008421
(43) Veröffentlichungstag der Anmeldung: 19.11.2014
(73) Patentinhaber: Zahoransky AG, 79674 Todtnau (DE)
(72) Erfinder: Kumpf, Ingo, 79674 Todtnau (DE); Rees, Bernhard, 79677 Aitern (DE); Kiefer, Florian, 79677 Fröhnd (DE)
(74) Vertreter: Börjes-Pestalozza, Henrich

(56) Entgegenhaltungen:
- EP-A1- 0 567 672
- EP-A1- 0 972 465
- EP-A1- 1 312 281
- EP-A2- 1 864 588
- WO-A2-01/56766
- DE-A1- 10 322 060
- DE-A1-102010 015 118
- US-B1- 6 352 313

## Beschreibung

Die Erfindung bezieht sich auf einen Formeinsatz für eine Spritzgießform mit einem Formbereich zur Bildung eines Bürstenteilkörpers und mit sich in den Formbereich erstreckenden Aufnahmelöchern für Borstenbündel.

Solche Formeinsätze sind beispielsweise aus der US 6 352 313 B1 bekannt. Diese als Kassetten verwendeten Formeinsätze werden mit Borstenbündeln bestückt und in ein Formnest einer Spritzgießform eingesetzt, so dass der Formeinsatz mit der übrigen Spritzgießform eine vollständige Formhöhlung zum Spritzen eines Bürstenkörpers bildet. Beim Einspritzen des Kunststoffmaterials in die Formhöhlung werden die in den Formbereich für den Bürstenteilkörper des Formeinsatzes hineinragenden Bündel-Enden der in den Aufnahmelöchern angeordneten Borstenbündel umspritzt und so mit dem gespritzten Bürstenkörper verbunden.

Weitere Formeinsätze dieser oder ähnlicher Bauweise sind auch aus EP 0 972 465 A1, EP 1 864 588 A2, WO 01/56766 A2, DE 103 22 060 A1, EP 1 312 281 A1 sowie aus EP 0 567 672 A1 bekannt.

Vielfach werden mehrere Formeinsätze in Mehrfach-Formen eingesetzt, um mehrere Bürsten gleichzeitig spritzen zu können. Hierzu können die einzelnen Formeinsätze, wie beispielsweise in der US 6 352 313 B1 gezeigt, in ein Trägerteil eingesetzt werden, das dann in die Mehrfachform eingesetzt wird.

Die Herstellung der Formeinsätze ist mit hohen musterspezifischen Kosten verbunden. Insbesondere Im Bereich des Formbereiches und der Übergänge vom Formbereich in die Aufnahmelöcher bestehen hohe Anforderungen an die Qualität und die Maßhaltigkeit. Die Formeinsätze werden daher häufig durch Drahtschneiden hergestellt, was jedoch aufwändig, zeitintensiv und somit teuer ist. Sollen Bürsten mit unterschiedlichen Eigenschaften, beispielsweise einem unterschiedlich angeordnetem Borstenfeld, hergestellt werden, so sind für jede Bürste spezielle Formeinsätze erforderlich. Dies gilt auch, wenn nur kleine Änderungen vorgenommen werden sollen, beispielsweise die Neigung einzelner Borstenbündel geändert werden soll. Ebenso ist es erforderlich, die Einführvorrichtung und zugehörige Stiftpakete, mit denen die Borstenbündel in den Formeinsatz von der dem Formbereich abgewandten Seite her eingeführt werden, an das jeweilige Borstenmuster anzupassen, was wiederum mit hohen Kosten verbunden ist.

Es besteht daher insbesondere die Aufgabe, einen Formeinsatz der eingangs genannten Art zu schaffen, der einfach und kostengünstig herstellbar ist und mit dem Musterwechsel zur Herstellung unterschiedlicher Bürsten einfacher möglich sind.

Die Lösung dieser Aufgabe besteht darin, dass der Formeinsatz mehrteilig ausgebildet ist und ein erstes Formeinsatz-Teil mit dem Formbereich für den Bürstenteilkörper und mit Teil-Aufnahmelöchern zur bereichsweisen Aufnahme von Borstenbündeln sowie ein zweites Formeinsatz-Teil mit sich in Gebrauchslage an die Teil-Aufnahmelöcher des ersten Formeinsatz-Teils anschließenden Teil-Aufnahmelöchern aufweist.

Die hohen Anforderungen an Qualität und Maßgenauigkeit bestehen nur am Formbereich des Formeinsatzes. Somit ist es ausreichend, das erste Formeinsatz-Teil mit entsprechender Präzision, beispielsweise über ein Drahtschneide-Verfahren, herzustellen. Das zweite Formeinsatz-Teil, das praktisch die Verlängerung der Teil-Aufnahmelöcher des ersten Formeinsatz-Teils aufweist, kann durch andere, weniger aufwändige und somit kostengünstigere Verfahren hergestellt werden.

Die Zeit, die zum Bearbeiten eines Werkstücks auf einer Drahtschneidemaschine erforderlich ist, ist stark von der Dicke des Werkstücks abhängig. Da das erste Formeinsatz-Teil im Verhältnis zum gesamten Formeinsatz vergleichsweise dünn ausgestaltet sein kann, kann dieses auch schneller und somit kostengünstiger hergestellt werden, wodurch die Kosten für den gesamten Formeinsatz reduziert sind.

Bei der Herstellung der schmalen ersten Formeinsatz-Teile kann zusätzlich Zeit eingespart werden, indem mehrere Werkstücke übereinander gespannt und diese dann gleichzeitig bearbeitet werden. Durch dieses sogenannte Huckepack-Verfahren werden die Rüstkosten extrem reduziert und der erfindungsgemäße Formeinsatz kann besonders kostengünstig hergestellt werden.

Das zweite Formeinsatz-Teil kann aus Kunststoff bestehen, wodurch sich die Kosten für den gesamten Formeinsatz weiter reduzieren lassen. Das zweite Formeinsatz-Teil kann dabei beispielsweise auch durch ein 3D-Druckverfahren hergestellt werden.

Alternativ kann das zweite Formeinsatz-Teil auch aus Metall bestehen und die Teil-Aufnahmelöcher gefräst oder gebohrt sein.

Die beiden Formeinsatz-Teile können im einfachsten Fall miteinander verklebt oder verschweißt sein.

Um erfindungsgemäß auf einfache Weise eine präzise Ausrichtung der beiden Formeinsatz-Teile zueinander zu erreichen, sind an dem zweiten Formeinsatz-Teil Justagestifte vorgesehen, die in Ausnehmungen des ersten Formeinsatz-Teils eingreifen und in den Ausnehmungen festlegbar sind. Mit Hilfe einer Lehre können die beiden Formeinsatz-Teile aufeinander ausgerichtet werden und anschließend durch Festlegen der Justagestifte in den Ausnehmungen aneinander fixiert werden.

Eine erste erfindungsgemäße Alternative sieht dabei vor, dass die Justagestifte aus Kunststoff bestehen und durch Anschmelzen mit den Ausnehmungen des ersten Formeinsatz-Teils verbindbar sind. Das Anschmelzen kann beispielsweise über eine Heizplatte erfolgen. Die Justagestifte können insbesondere so dimensioniert sein, dass sie zunächst über die Ausnehmungen überstehen und durch das Anschmelzen auf das Niveau der Ausnehmungen verkürzt werden. Bei einer solchen Verbindung sind die beiden Formeinsatz-Teile nicht ohne Beschädigung des zweiten Formeinsatz-Teils wieder voneinander trennbar. Denkbar ist auch, dass die Justagestifte an dem ersten Formeinsatz-Teil und die Ausnehmungen an dem zweiten Formeinsatz-Teil vorgesehen sind.

Eine zweite erfindungsgemäße Alternative sieht vor, dass Justagehülsen zum axialen Festlegen der Justagestifte in den Ausnehmungen vorgesehen sind und jeweils ein mit einer Füllmasse ausfüllbarer Spalt zwischen der Innenwandung der Ausnehmung und der Justagehülse vorgesehen ist.

Auch bei dieser Variante können die beiden Formeinsatz-Teile mit Hilfe einer Lehre aufeinander ausgerichtet werden. Danach wird die Justagehülse auf den Justagestift gesetzt und der Spalt mit der Füllmasse ausgefüllt, wodurch die beiden Formeinsatz-Teile miteinander verbunden sind.

Die Füllmasse kann insbesondere ein Verbindungsharz sein, das schnell aushärtet und eine feste und sichere Verbindung bildet. Alternativ könnten auch andere Stoffe, beispielsweise Klebstoffe verwendet werden.

Zusätzlich zu den vorbeschriebenen Verbindungsarten kann das erste Formeinsatz-Teil mittels einer Schraubverbindung an dem zweiten Formeinsatz-Teil festlegbar sein.

Durch die vorbeschriebenen Verbindungsarten ist eine sichere Verbindung der beiden Formeinsatz-Teile miteinander möglich, unabhängig von deren Materialien und auch, wenn diese aus unterschiedlichen Materialien bestehen.

Es ist zweckmäßig, wenn der Formeinsatz in eine mehrere Ausnehmungen zur Aufnahme jeweils eines Formeinsatzes aufweisende, einen Formeinsatz-Träger bildende Kassette einsetzbar ist. Somit lassen sich mehrere Formeinsätze schnell und auf einfache Art in eine Mehrfach-Spritzgießform einsetzen und zwischen Bearbeitungsstationen transportieren.

Das erste Formeinsatz-Teil kann bevorzugt über eine Schraubverbindung mit der Kassette lösbar verbindbar sein. Dies ermöglicht eine einfache und trotzdem sichere und lagestabile Festlegung der Formeinsätze an der Kassette, da sowohl das erste Formeinsatz-Teil und die Kassette üblicherweise jeweils aus Metall bestehen. Das zweite Formeinsatz-Teil ist dabei jeweils nur mit dem zugehörigen ersten Formeinsatz-Teil und nicht direkt mit der Kassette verbunden.

Ein weiterführender Erfindungsgedanke sieht vor, dass der Formbereich für den Bürstenteilkörper des ersten Formeinsatz-Teils zur Aufnahme einer Borstenträgerplatte ausgebildet ist. Die Borstenträgerplatte bildet an der fertigen Bürste eine zusätzliche Material-Komponente im Bereich des Borsten-Grundes, die auch seitlich über den gespritzten Bürstenkörper überstehen kann. Somit können auch mehrfarbige Bürstenkörper hergestellt werden, ohne den gespritzten Bürstenkörper mit einer weiteren Material-Komponente zu umspritzen.

Die Borstenbündel werden bei dieser Ausführungsform an den freien Enden der Teil-Aufnahmelöcher des zweiten Formeinsatz-Teils in den Formeinsatz eingeführt, und mit ihren befestigungsseitigen Enden durch die Teil-Aufnahmelöcher des ersten Formeinsatz-Teils sowie Durchgangsöffnungen der Borstenträgerplatte in den Formbereich eingeführt. Die befestigungsseitigen Enden der Borstenbündel können vor dem Schließen der Spritzgießform angeschmolzen werden, damit diese beim Spritzen des Bürstenteilkörpers besser in dem Spritzmaterial verankert werden.

Es ist vorteilhaft, wenn die Teil-Aufnahmelöcher des ersten Formeinsatz-Teils an ihren dem zweiten Formeinsatz-Teil zugewandten Ende jeweils eine Fase aufweisen. Dadurch wird einerseits das Einführen der Borstenbündel in die Teil-Aufnahmelöcher erleichtert. Andererseits kann die Herstellung des ersten Formeinsatz-Teils vereinfacht und verkürzt werden, indem zunächst die Fasen durch Fräsen eingebracht und anschließend die restlichen Teil-Aufnahmelöcher beispielsweise durch Drahtschneiden eingebracht werden. Durch die um die Ausdehnung der Fasen reduzierte Bearbeitungsbreite kann die Schnittzeit beim Drahtschneiden weiter reduziert werden.

Dabei kann besonders zweckmäßig sein, wenn die Fase eines Teil-Aufnahmeloches des ersten Formeinsatz-Teils hinsichtlich der Haupterstreckungsrichtung des Teil-Aufnahmeloches größer ist als der übrige Abschnitt des Teil-Aufnahmeloches. Der sich an die Fase anschließende, üblicherweise zylindrische Abschnitt kann dabei sehr klein ausgebildet sein, so dass dieser einerseits schnell in das erste Formeinsatz-Teil eingebracht werden kann. Andererseits kann dadurch die Fase an ihrem einführseitigen Ende gegenüber dem dem Formbereich zugewandten Ende des Teil-Aufnahmelochs deutlich verbreitert sein, was das Einführen eines Borstenbündels, insbesondere in einer schrägen Ausrichtung, vereinfacht.

Wenn im Borstenfeld der fertigen Bürste schräg angeordnete Borstenbündel gewünscht sind, ist es zweckmäßig, wenn einzelne oder alle Teil-Aufnahmelöcher des ersten Formeinsatz-Teils schräg angeordnet sind. Die Borstenbündel werden dann in den Teil-Aufnahmelöchern in der jeweiligen gewünschten Lage gehalten, so dass Borstenfelder mit entsprechend schräg stehenden Borstenbündeln realisierbar sind.

Es kann zudem zweckmäßig sein, wenn einzelne oder alle Teil-Aufnahmelöcher des zweiten Formeinsatz-Teils zumindest im dem ersten Formeinsatz-Teil zugewandten Bereich schräg verlaufend angeordnet sind. Durch das schräge Einführen eines Borstenbündels in ein angefastes Teil-Aufnahmeloch des ersten Formeinsatz-Teils behält dieses Borstenbündel diese Schräglage an seinem verbindungsseitigen, in den Formbereich hineinragenden Ende bei. Durch das Anschmelzen des verbindungsseitigen Bündel-Endes und dem Umspritzen des angeschmolzenen Bündel-Endes bleibt die schräge Ausrichtung des Bündels auch nach dem Entfernen von dem Formeinsatz erhalten. Somit ist es nicht erforderlich, dass das betreffende Teil-Aufnahmeloch des ersten Formeinsatz-Teils selbst schräg angeordnet sein muss. Durch die Möglichkeit, die betreffenden Teil-Aufnahmelöcher auch für schräg anzuordnende Borstenbündel gerade auszubilden, können auch hierbei mehrere erste Formeinsatz-Teile im vorbeschriebenen Huckepack-Verfahren hergestellt werden, was deren Herstellung vereinfacht und beschleunigt.

Dabei ist besonders zweckmäßig, wenn einzelne oder alle Teil-Aufnahmelöcher des zweiten Formeinsatz-Teils zumindest abschnittsweise einen abgewinkelten oder kurvenförmigen Verlauf aufweisen und wenn die Teil-Aufnahmelöcher in ihrem dem ersten Formeinsatz-Teil abgewandten Einführungsbereich jeweils senkrecht zur Oberfläche des zweiten Formeinsatz-Teils angeordnet sind.

Dies ermöglicht einerseits, die Teil-Aufnahmelöcher des zweiten Formeinsatz-Teils für schrägstehende Borstenbündel voneinander zu entzerren. Beispielsweise kann durch ein schräg auf das erste Formeinsatz-Teil zulaufendes Teil-Aufnahmeloch, welches im Verlauf hin zum Einführungsbereich eine Richtungsänderung erfährt und am Einführungsbereich senkrecht zur Oberfläche des zweiten Formeinsatz-Teils angeordnet ist, an der fertigen Bürste ein Borstenbündel erzeugt werden, das sich an seinem freien Ende mit benachbarten Borstenbündeln überlappt.

Andererseits ist das Einführen der Borstenbündel in die Teil-Aufnahmelöcher des zweiten Formeinsatz-Teils wesentlich vereinfacht, wenn alle Teil-Aufnahmelöcher senkrecht zur Oberfläche des zweiten Formeinsatz-Teils angeordnet sind. Die zuzuführenden Borstenbündel können in einer Einführvorrichtung mit geraden Aufnahmeöffnungen für die Borstenbündel angeordnet sein. Die Aufnahmeöffnungen der Einführvorrichtung fluchten dabei mit den einführseitigen Öffnungen der Teil-Aufnahmelöcher des zweiten Formeinsatz-Teils. Somit können die Borstenbündel mittels gerader Stifte aus der Einführvorrichtung in das zweite Formeinsatz-Teil umgesetzt werden.

Es ist vorteilhaft, wenn die Teil-Aufnahmelöcher des zweiten Formeinsatz-Teils an ihrem dem ersten Formeinsatz-Teil abgewandten Einführungsbereich größere Abstände zueinander aufweisen als an ihrem dem ersten Formeinsatz-Teil zugewandten Bereich.

Je nach Material und Ausführung einer Einführvorrichtung für die Borstenbündel müssen deren Aufnahmeöffnungen einen bestimmten Mindestabstand aufweisen. Durch einen kurvenförmigen Verlauf der Teil-Aufnahmelöcher des zweiten Formeinsatz-Teils können die Borstenbündel mit einem demgegenüber reduzierten Abstand, das heißt mit größerer Bündel-Dichte in die entsprechend angeordneten Teil-Aufnahmelöcher des ersten Formeinsatz-Teils eingeführt werden.

Eine weitere Ausführungsform sieht vor, dass Teil-Aufnahmelöcher des zweiten Formeinsatz-Teils von ihrem dem ersten Formeinsatz-Teil abgewandten Einführungsbereich hin zum dem ersten Formeinsatz-Teil zugewandten Bereich eine Änderung ihres Querschnitts aufweisen. Somit lassen sich beispielsweise Borstenbündel mit rundem Querschnitt in Borstenbündel mit rechteckigem Querschnitt umformen.

Möglich ist auch, mehrere Borstenbündel zu einem größeren Borstenbündel zusammenzuführen, indem ein Teil-Aufnahmeloch Y-förmig verzweigt ausgebildet ist.

Insbesondere bei zweiten Formeinsatz-Teilen mit abgewinkeltem oder kurvenförmigem Verlauf der Teil-Aufnahmelöcher kann es zweckmäßig sein, wenn das zweite Formeinsatz-Teil mehrteilig ausgebildet ist.
Das zweite Formeinsatz-Teil kann in Haupt-Erstreckungsrichtung der Teil-Aufnahmelöcher unterteilt sein, so dass die jeweiligen Abschnitte der Teil-Aufnahmelöcher zumindest weitgehend linear ausgebildet sind und durch einfache Verfahren wie fräsen oder Bohren herstellbar sind.

Nachstehend sind Ausführungsbeispiele des erfindungsgemäßen Formeinsatzes anhand der Zeichnungen näher erläutert.

Es zeigt, zum Teil schematisiert:
- Fig. 1: vier in einer Kassette gehaltene Formeinsätze mit gespritzten Bürstenkörpern,
- Fig. 2: einen Abschnitt der Kassette aus Figur 1,
- Fig. 2a: eine Detaildarstellung aus Figur 2
- Fig. 3: einen Querschnitt eines in einer Kassette gehaltenen Formeinsatzes sowie eine Einführvorrichtung,
- Fig. 4: eine Ansicht ähnlich Figur 2 mit einer Borstenträgerplatte,
- Fig. 4a: eine Detaildarstellung aus Figur 4,
- Fig. 5: einen Querschnitt eines in einer Kassette gehaltenen Formeinsatzes mit einer Borstenträgerplatte sowie eine Einführvorrichtung,
- Fig. 6: eine Bürste mit unterschiedlich ausgerichtetet Borstenbündeln,
- Fig. 7: verschiedene Ausführungen eines Formeinsatzes jeweils mit gespritztem Bürstenkörper und
- Fig. 8: eine schematische Darstellung einzelner Arbeitsstationen beim Herstellen einer Bürste.

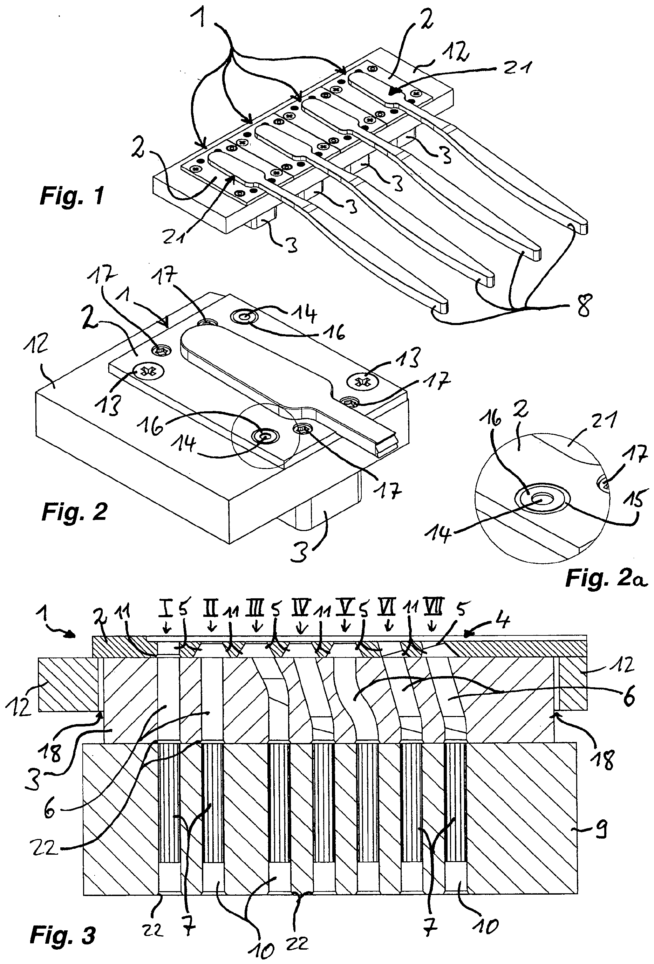

Ein im Ganzen mit 1 bezeichneter Formeinsatz ist gemäß Figur 3 mehrteilig ausgebildet und weist ein erstes Formeinsatz-Teil 2 und ein zweites Formeinsatz-Teil 3 auf. Das erste Formeinsatz-Teil 2 weist einen Formbereich 4 zur Bildung eines Bürstenteilkörpers 21 sowie Teil-Aufnahmelöcher 5 zur Bereichsweisen Aufnahme von Borstenbündeln 7 auf. Das zweite Formeinsatz-Teil 3 weist Teil-Aufnahmelöcher 6 für die Borstenbündel 7 auf, die sich an die Teil-Aufnahmelöcher 5 des ersten Formeinsatz-Teils 2 anschließen.

Der Formeinsatz 1 kann in eine nicht dargestellte Spritzgießform eingesetzt werden, in der der Formbereich 4 in Verbindung mit einem weiteren Formteil der Spritzgießform zu einer Formhöhlung für einen Bürstenkörper 8 oder Bürstenteilkörper 21 ergänzt wird. Die Borstenbündel 7 werden vor dem Spritzvorgang derart in die Teil-Aufnahmelöcher 5,6 eingeschoben, dass ihre befestigungsseitigen Enden in den Formbereich 4 ragen. Durch Einspritzen von Kunststoffmaterial in die Formhöhlung werden die befestigungsseitigen Enden der Borstenbündel 7 umspritzt und die Borstenbündel 7 so in dem gespritzten Bürstenteilkörper 21 verankert. Gegebenenfalls können die freien Enden der Borstenbündel 7 vor dem Spritzvorgang angeschmolzen werden.

Eine besonders hohe Maßgenauigkeit und entsprechende Anforderungen an die Qualität sind nur im Bereich des Formbereichs 4 erforderlich. Zur Aufnahme des übrigen Teils der Borstenbündel 7 kann eine demgegenüber reduzierte Qualität ausreichend sein. Das erste Formeinsatz-Teil 2 kann daher in Relation zur gesamten Dicke des Formeinsatzes 1 vergleichsweise dünn ausgebildet sein und somit kostengünstiger und in kürzerer Zeit hergestellt werden, als ein einteiliger Formeinsatz, der insgesamt mit teuren und zeitaufwändigen Verfahren und Materialien herzustellen wäre. Das zweite Formeinsatz-Teil 3, das lediglich zur Aufnahme des größten Teils der Borstenbündel 7 dient, kann durch einfachere Verfahren, beispielsweise auch über 3-D-Drucker und aus Kunststoff und somit bedeutend schneller und kostengünstiger hergestellt werden.

Zum Einführen der Borstenbündel 7 ist eine Einführvorrichtung 9 vorgesehen, die an das einführseitige Ende des zweiten Formeinsatz-Teils 3 anlegbar ist. Die Einführeinrichtung 9 weist Ausnehmungen 10 zur Aufnahme der Borstenbündel 7 auf. Über nicht dargestellte Stifte können die Borstenbündel 7 in die Teil-Aufnahmelöcher 6 des zweiten Formeinsatz-Teils 3 eingeschoben werden, bis die befestigungsseitigen Enden der Borstenbündel 7 auch die Teil-Aufnahmelöcher 5 des ersten Formeinsatz-Teils 2 durchdringen und in den Formbereich 4 hineinragen. Um das Einführen der Borstenbündel 7 zu vereinfachen, sind an den zuführseitigen Enden der Ausnehmungen 10 und der Teil-Aufnahmelöcher 6 des zweiten Formeinsatz-Teils 3 jeweils Einführfasen 22 vorgesehen.

Die befestigungsseitigen Enden der Borstenbündel 7 können dann angeschmolzen und der Formeinsatz 1 in eine nicht dargestellte Spritzgießform eingesetzt werden.

Die einzelnen, in dem Formeinsatz 1 gemäß Figur 3 gezeigten Teil-Aufnahmelöcher 5,6 verdeutlichen unterschiedliche Möglichkeiten, die Teil-Aufnahmelöcher 5,6 auszugestalten und somit die Borstenbündel 7 in der fertigen Bürste 19 anzuordnen und auszurichten.

Im mit I bezeichneten Bereich sind die Teil-Aufnahmelöcher 5,6 der beiden Formeinsatz-Teile 2,3 jeweils gerade ausgebildet, so dass das Borstenbündel 7 an der fertigen Bürste ebenfalls gerade, im rechten Winkel von dem Bürstenteilkörper 21 vorsteht. An seiner dem zweiten Formeinsatz-Teil 3 zugewandten Seite weist das zugehörige Teil-Aufnahmeloch 5 des ersten Formeinsatz-Teils 2 eine Fase 11 auf, um den Übergang des Borstenbündels 7 zwischen den beiden Teil-Aufnahmelöchern 5,6 zu erleichtern.

Um schräg stehende Borstenbündel 7 an der fertigen Bürste 19 zu erreichen, können wie in den Bereichen VI und VII gezeigt, die Teil-Aufnahmelöcher 5 des ersten Formeinsatz-Teils 2 entsprechend der gewünschten Bündel-Neigung schräg in das Formeinsatz-Teil 2 eingebracht sein. Die zugehörigen Teil-Aufnahmelöcher 6 des zweiten Formeinsatz-Teils 3 sind im dem ersten Formeinsatz-Teil 2 zugewandten Endbereich ebenfalls mit der entsprechenden Neigung ausgebildet.

Bei den Bereichen II bis V weisen die Teil-Aufnahmelöcher 5 des ersten Formeinsatz-Teils 2 jeweils eine vergrößerte und verbreiterte Fase 11 auf. Die Fase 11 ist dabei jeweils hinsichtlich der Haupterstreckungsrichtung des Teil-Aufnahmeloches deutlich größer als der übrige Abschnitt des Teil-Aufnahmeloches 5.

Dadurch können Borstenbündel 7 in unterschiedlichen Winkelstellungen zugeführt werden. Durch das Anschmelzen der befestigungsseitigen freien Bündelenden sind die einzelnen Borstenfilamente eines Borstenbündels 7 relativ zueinander festgelegt, so dass die Neigung des gesamten Borstenbündels 7 auch nach dem Entfernen der fertigen Bürste 19 von dem Formeinsatz 1 erhalten bleibt.

Die Neigung des Borstenbündels 7 wird dabei durch die Ausrichtung des jeweiligen Teil-Aufnahmelochs 6 des zweiten Formeinsatz-Teils 3 vorgegeben. Somit können bei identischer Ausgestaltung der Teil-Aufnahmelöcher 5 des ersten Formeinsatz-Teils 2 allein durch die Anordnung der Teil-Aufnahmelöcher 6 des zweiten Formeinsatz-Teils 3 unterschiedliche Borstenfelder mit unterschiedlich ausgerichteten Borstenbündeln 7 erzeugt werden. Da das erste Formeinsatz-Teil 2 für unterschiedliche Bürsten eingesetzt werden kann und lediglich das zweite Formeinsatz-Teil 3, das einfach und kostengünstig herstellbar ist, ausgetauscht werden muss, können unterschiedliche Bürsten kostengünstig und auf vergleichsweise einfache Art hergestellt werden.

Im Bereich II ist dargestellt, dass auch bei einem Teil-Aufnahmeloch 5 mit einer großen Fase 11 senkrecht angeordnete Borstenbündel 7 erzielt werden können.

In den Bereichen III und IV ist zu erkennen, dass bei gleichartigen Teil-Aufnahmelöchern 5 im ersten Formeinsatz-Teil 2 durch entsprechende Anordnung und Ausrichtung der Teil-Aufnahmelöcher 6 im zweiten Formeinsatz-Teil 3 unterschiedliche Bündel-Neigungen erzielt werden können.

Im Bereich V wird durch einen kurvenförmigen Verlauf des Teil-Aufnahmelochs 6 im zweiten Formeinsatz-Teil 3 ein Achsversatz zwischen dem Teil-Aufnahmeloch 5 des ersten Formeinsatz-Teils 2 und der zugehörigen Ausnehmung 10 der Einführvorrichtung 9 erreicht. Somit können beispielsweise Borstenfelder mit eng benachbarten Borstenbündeln 7 realisiert werden, selbst wenn die Ausnehmungen 10 der Einführvorrichtung 9 einen bestimmten Mindestabstand zueinander aufweisen müssen. Die Abstände der Teil-Aufnahmelöcher 5 des ersten Formeinsatz-Teils 2 können somit wesentlich geringer sein als die Abstände der Ausnehmungen 10 der Einführvorrichtung 9.

Durch den abgewinkelten oder kurvenförmigen Verlauf der Teil-Aufnahmelöcher 6 des zweiten Formeinsatz-Teils 3 sind diese im Zuführbereich für die Borstenbündel 7 jeweils senkrecht zur Oberfläche des zweiten Formeinsatz-Teils 3 ausgerichtet, so dass alle Borstenbündel 7 in einheitlicher, gerader Richtung eingeführt werden können. Das Einführen der Borstenbündel 7 in die Teil-Aufnahmelöcher 6 ist somit mittels gerader, parallel zueinander angeordneter Einführstifte schnell und einfach möglich.

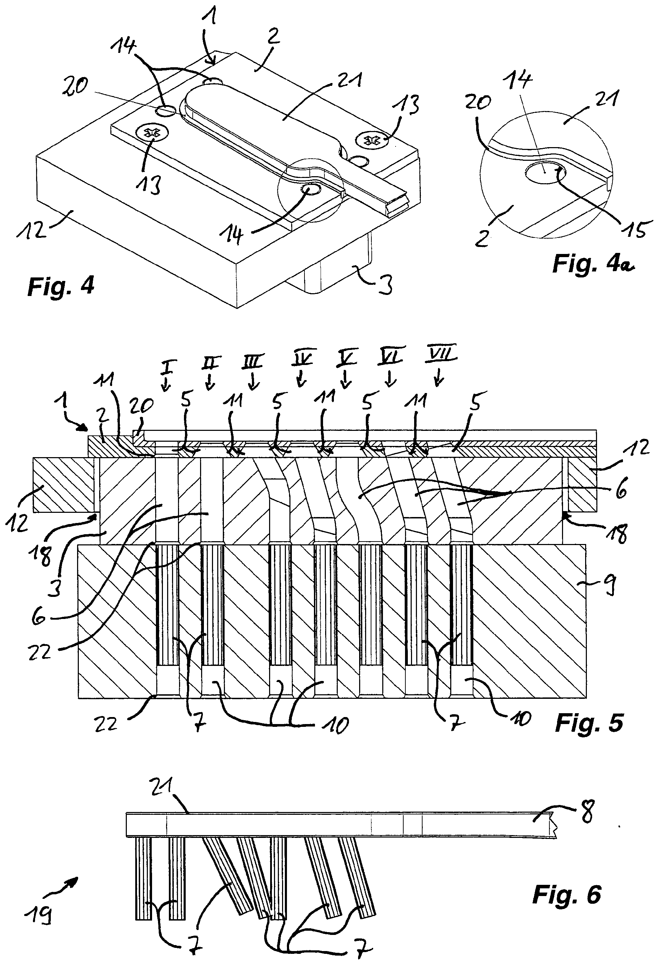

Eine Bürste 19, wie sie mit einem Formeinsatz 1 gemäß Figur 3 hergestellt werden kann, ist in Figur 6 gezeigt, wobei der Bürstenkörper 8 nur bereichsweise dargestellt ist. Dabei wird auch deutlich, dass sich einzelne Borstenbündel 7 überlappen können, was mit vorbekannten Formeinsätzen nicht realisierbar war.

Mehrere Formeinsätze 1 können in eine Kassette 12 eingesetzt werden, die dann in eine Mehrfach-Spritzgießform eingesetzt werden kann.

Eine solche Kassette 12 mit vier Formeinsätzen 1 ist in Figur 1 dargestellt. Bei dieser Darstellung sind bereits die Bürstenkörper 8 angespritzt.

Figur 2 zeigt vergrößert den linken Abschnitt der Kassette 12 aus Figur 1 und Figur 2a wiederum eine Detailvergrößerung des eingekreisten Bereichs aus Figur 2.

Zum Verbinden der beiden Formeinsatz-Teile 2,3 miteinander sind an dem zweiten Formeinsatz-Teil 3 Justagestifte 14 vorgesehen, die in Ausnehmungen 15 des ersten Formeinsatz-Teils 2 eingreifen. Die Justagestifte 14 können beispielsweise aus Stahl bestehen und über eine Klebeverbindung mit dem zweiten Formeinsatz-Teil 3 verbunden sein. Mit Hilfe einer Lehre können das erste Formeinsatz-Teil 2 und das zweite Formeinsatz-Teil 3 in der gewünschten Positionierung zueinander ausgerichtet werden. Mittels Justagehülsen 16, die über die Justagestifte 14 gestülpt werden, werden die beiden Formeinsatz-Teile 2,3 grob aneinander festgelegt. Der zwischen der Justagehülse 16 und der Innenwandung der Ausnehmung 15 verbliebene Zwischenraum wird mit einer Füllmasse, beispielsweise einem Verbindungsharz, ausgefüllt, die nach dem Aushärten eine feste Verbindung zwischen den beiden Formeinsatz-Teilen 2,3 bildet. Zusätzlich können die beiden Formeinsatz-Teile 2,3 mittels Schrauben 17 miteinander verbunden werden.

Mittels Schrauben 13 sind die ersten Formeinsatz-Teile 2 jeweils mit der Kassette 12 verbunden. Eine direkte Verbindung zwischen der Kassette 12 und den zweiten Formeinsatz-Teilen 3 besteht hingegen nicht, was auch durch den Spalt 18 zwischen den beiden Teilen (Figur 3) verdeutlicht ist.

In den Figuren 4 und 5 ist noch gezeigt, dass der Formbereich 4 für den Bürstenteilkörper des ersten Formeinsatz-Teils 2 zur Aufnahme einer Borstenträgerplatte 20 ausgebildet sein kann. Diese kann wie in Figur 5 gut zu erkennen ist, vor dem Einführen der Borstenbündel 7 in den Formbereich 4 eingesetzt werden. Beim Einführen der Borstenbündel 7 durchdringen diese dann auch die Borstenträgerplatte 20.

In Figur 4 sowie der Detaildarstellung des eingekreisten Bereichs in Figur 4a ist eine alternative Möglichkeit zur Verbindung der beiden Formeinsatz-Teile 2,3 miteinander gezeigt. Dabei durchgreifen Justagestifte 14 aus Kunststoff des zweiten Formeinsatz-Teils 3 Ausnehmungen 15 des ersten Formeinsatz-Teils 2. Nach dem Ausrichten der beiden Formeinsatz-Teile 2,3 zueinander werden die zunächst über die Oberfläche des ersten Formeinsatz-Teils 2 überstehenden Justagestifte 14 angeschmolzen, beispielsweise mittels einer Heizplatte. Das angeschmolzene Material der Justagestifte 14 füllt dabei die Ausnehmungen 15 aus und führt zu einer Verbindung der beiden Formeinsatz-Teile 2,3. Gegebenenfalls können auch hier die beiden Formeinsatz-Teile 2,3 mittels in Figur 4 und 4a nicht dargestellten Schrauben zusätzlich fixiert werden.

Da die Justagestifte 14 als Teil der zweiten Formeinsatz-Teile 3 bei dieser Variante angeschmolzen werden, ist eine Wiederverwendung der zweiten Formeinsatz-Teile 3 nach dem Trennen der beiden Formeinsatz-Teile 2,3 nicht möglich.

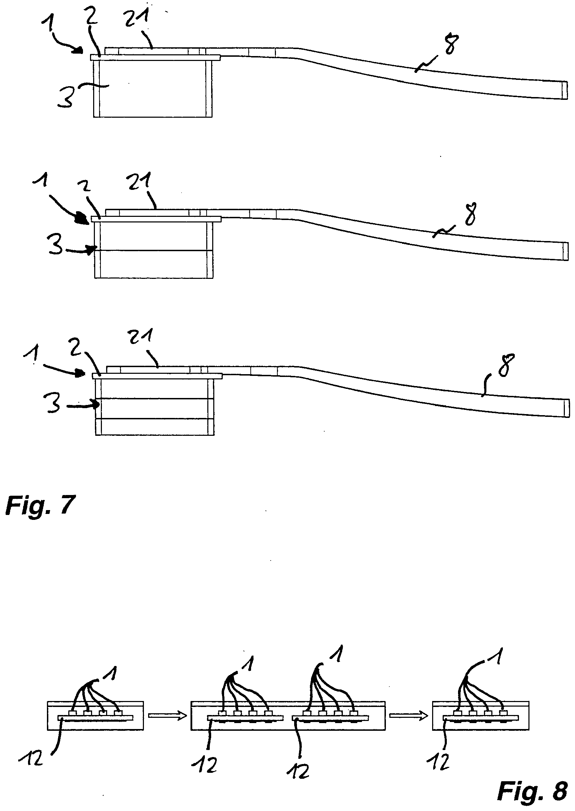

In Figur 7 ist dargestellt, dass das zweite Formeinsatz-Teil 3 selbst mehrteilig ausgebildet sein kann. Es ist jeweils ein Formeinsatz 1 mit bereits gespritztem Bürstenkörper 8 dargestellt. In der obersten Darstellung ist das zweite Formeinsatz-Teil 3 einteilig ausgebildet, während es in der mittleren Darstellung zweiteilig und in der unteren Darstellung dreiteilig ausgebildet ist. Eine mehrteilige Ausbildung des zweiten Formeinsatz-Teils 3 kann insbesondere bei abgewinkelten oder kurvenförmigen Teil-Aufnahmelöchern 6 zweckmäßig sein, da weitgehend gerade Abschnitte der Teil-Aufnahmelöcher 6 in den einzelnen Bereichen des zweiten Formeinsatz-Teils 3 eingebracht werden können, was deren Herstellung vereinfachen kann.

In Figur 8 ist ein Bearbeitungsablauf schematisch dargestellt. Im linken Bereich werden an einer Kassette 12 gehaltene Formeinsätze 1 mit Borstenbündeln 7 bestückt. So bestückte Formeinsätze 1 können in eine Spritzgießform eingesetzt werden. Im mittleren Bereich ist eine Spritzgießmaschine symbolisiert, in der zwei Kassetten 12 mit Formeinsätzen 1 eingesetzt sind, beispielsweise zum Spritzen der Bürstenkörper und anschließend zum Umspritzen der Bürstenkörper mit einer weiteren, beispielsweise farblich unterschiedlichen Materialkomponente. Rechts ist eine Entnahmestation angedeutet, an der die fertigen Bürsten aus den Formeinsätzen 1 entnommen werden.

## Patentansprüche

1. Formeinsatz (1) für eine Spritzgießform mit einem Formbereich (4) zur Bildung eines Bürstenteilkörpers (21) und mit sich in den Formbereich (4) erstreckenden Aufnahmelöchern für Borstenbündel (7), wobei der Formeinsatz (1) mehrteilig ausgebildet ist und ein erstes Formeinsatz-Teil (2) mit dem Formbereich (4) für den Bürstenteilkörper (21) und mit Teil-Aufnahmelöchern (5) zur bereichsweisen Aufnahme von Borstenbündeln (7) sowie ein zweites Formeinsatz-Teil (3) mit sich in Gebrauchslage an die Teil-Aufnahmelöcher (5) des ersten Formeinsatz-Teils (2) anschließenden Teil-Aufnahmelöchern (6) aufweist, **dadurch gekennzeichnet, dass** an dem zweiten Formeinsatz-Teil (3) Justagestifte (14) vorgesehen sind, die in Ausnehmungen (15) des ersten Formeinsatz-Teils (2) eingreifen und in den Ausnehmungen (15) festlegbar sind, wobei die Justagestifte (14) aus Kunststoff bestehen und durch Anschmelzen mit den Ausnehmungen (15) des ersten Formeinsatz-Teils (2) verbindbar sind oder wobei Justagehülsen (16) zum axialen Festlegen der Justagestifte (14) in den Ausnehmungen (15) vorgesehen sind und wobei jeweils ein mit einer Füllmasse ausfüllbarer Spalt zwischen der Innenwandung der Ausnehmung (15) und der Justagehülse (16) vorgesehen ist.

2. Formeinsatz nach Anspruch 1, **dadurch gekennzeichnet, dass** das zweite Formeinsatz-Teil (3) aus Kunststoff besteht.

3. Formeinsatz nach Anspruch 1 oder 2, **dadurch gekennzeichnet, dass** die Füllmasse ein Verbindungsharz ist.

4. Formeinsatz nach einem der Ansprüche 1 bis 3, **dadurch gekennzeichnet, dass** das erste Formeinsatz-Teil (2) mittels einer Schraubverbindung an dem zweiten Formeinsatz-Teil (3) festlegbar ist.

5. Formeinsatz nach einem der Ansprüche 1 bis 4, **dadurch gekennzeichnet, dass** der Formeinsatz (1) in eine mehrere Ausnehmungen zur Aufnahme jeweils eines Formeinsatzes (1) aufweisende, einen Formeinsatz-Träger bildende Kassette (12) einsetzbar ist.

6. Formeinsatz nach Anspruch 5, **dadurch gekennzeichnet, dass** das erste Formeinsatz-Teil (2) über eine Schraubverbindung mit der Kassette (12) lösbar verbindbar ist.

7. Formeinsatz nach einem der Ansprüche 1 bis 6, **dadurch gekennzeichnet, dass** der Formbereich (4) für den Bürstenteilkörper (21) des ersten Formeinsatz-Teils (2) zur Aufnahme einer Borstenträgerplatte (20) ausgebildet ist.

8. Formeinsatz nach einem der Ansprüche 1 bis 7, **dadurch gekennzeichnet, dass** die Teil-Aufnahmelöcher (5) des ersten Formeinsatz-Teils (2) an ihren dem zweiten Formeinsatz-Teil (3) zugewandten Ende jeweils eine Fase (11) aufweisen.

9. Formeinsatz nach Anspruch 8, **dadurch gekennzeichnet, dass** die Fase (11) eines Teil-Aufnahmeloches (5) des ersten Formeinsatz-Teils (2) hinsichtlich der Haupterstreckungsrichtung des Teil-Aufnahmeloches (5) größer ist als der übrige Abschnitt des Teil-Aufnahmeloches (5).

10. Formeinsatz nach einem der Ansprüche 1 bis 9, **dadurch gekennzeichnet, dass** einzelne oder alle Teil-Aufnahmelöcher (5) des ersten Formeinsatz-Teils (2) schräg angeordnet sind.

11. Formeinsatz nach einem der Ansprüche 1 bis 10, **dadurch gekennzeichnet, dass** einzelne oder alle Teil-Aufnahmelöcher (6) des zweiten Formeinsatz-Teils (3) zumindest im dem ersten Formeinsatz-Teil (2) zugewandten Bereich schräg verlaufend angeordnet sind.

12. Formeinsatz nach einem der Ansprüche 1 bis 11, **dadurch gekennzeichnet, dass** einzelne oder alle Teil-Aufnahmelöcher (6) des zweiten Formeinsatz-Teils (3) zumindest abschnittsweise einen abgewinkelten oder kurvenförmigen Verlauf aufweisen und dass die Teil-Aufnahmelöcher (6) in ihrem dem ersten Formeinsatz-Teil (2) abgewandten Einführungsbereich jeweils senkrecht zur Oberfläche des zweiten Formeinsatz-Teils (3) angeordnet sind.

13. Formeinsatz nach einem der Ansprüche 1 bis 12, **dadurch gekennzeichnet, dass** die Teil-Aufnahmelöcher (6) des zweiten Formeinsatz-Teils (3) an ihrem dem ersten Formeinsatz-Teil (2) abgewandten Einführungsbereich größere Abstände zueinander aufweisen als an ihrem dem ersten Formeinsatz-Teil (2) zugewandten Bereich.

14. Formeinsatz nach einem der Ansprüche 1 bis 13, **dadurch gekennzeichnet, dass** Teil-Aufnahmelöcher (6) des zweiten Formeinsatz-Teils (3) von ihrem dem ersten Formeinsatz-Teil (2) abgewandten Einführungsbereich hin zum dem ersten Formeinsatz-Teil (2) zugewandten Bereich eine Änderung ihres Querschnitts aufweisen.

15. Formeinsatz nach einem der Ansprüche 1 bis 14, **dadurch gekennzeichnet, dass** das zweite Formeinsatz-Teil (3) mehrteilig ausgebildet ist.

## Claims

1. Mould insert (1) for an injection mould, comprising a moulding region (4) for forming a brush part body (21) and having receiving holes, which extend into the moulding region (4), for bristle bundles (7), wherein the mould insert (1) is configured in multiple parts and includes a first mould insert part (2) having the moulding region (4) for the brush part body (21) and having partial receiving holes (5) for receiving bristle bundles (7) in regions, and a second mould insert part (3) having partial receiving holes (6) which, in a use position, adjoin the partial receiving holes (5) of the first mould insert part (2), **characterised in that** adjustment pins (14) are provided on the second mould insert part (3), which engage into recesses (15) of the first mould insert part (2) and can be fixed in the recesses (15), wherein the adjustment pins (14) consist of plastics material and can be connected to the recesses (15) of the first mould insert part (2) by incipient melting or wherein adjustment bushes (16) for axially fixing the adjustment pins (14) in the recesses (15) are provided and wherein in each case a gap which can be filled with a filling composition is provided between the inner wall of the recess (15) and the adjustment bush (16).

2. Mould insert as claimed in claim 1, **characterised in that** the second mould insert part (3) consists of plastics material.

3. Mould insert as claimed in claim 1 or 2, **characterised in that** the filling composition is a tie resin.

4. Mould insert as claimed in any one of claims 1 to 3, **characterised in that** the first mould insert part (2) can be fixed to the second mould insert part (3) by means of a screw connection.

5. Mould insert as claimed in any one of claims 1 to 4, **characterised in that** the mould insert (1) is insertable into a cassette (12) which has a plurality of recesses for receiving in each case a mould insert (1) and which forms a mould insert carrier.

6. Mould insert as claimed in claim 5, **characterised in that** the first mould insert part (2) is releasably connectable to the cassette (12) by a screw connection.

7. Mould insert as claimed in any one of claims 1 to 6, **characterised in that** the moulding region (4) for the brush part body (21) of the first mould insert part (2) is configured to receive a bristle carrier plate (20).

8. Mould insert as claimed in any one of claims 1 to 7, **characterised in that** the partial receiving holes (5) of the first mould insert part (2) in each case have a bevel (11) on an end thereof which faces towards the second mould insert part (3).

9. Mould insert as claimed in claim 8, **characterised in that** the bevel (11) of a partial receiving hole (5) of the first mould insert part (2), with respect to the main direction of extent of the partial receiving hole (5), is larger than the remaining portion of the partial receiving hole (5).

10. Mould insert as claimed in any one of claims 1 to 9, **characterised in that** individual ones or all of the partial receiving holes (5) of the first mould insert part (2) are arranged obliquely.

11. Mould insert as claimed in any one of claims 1 to 10, **characterised in that** individual ones or all of the partial receiving holes (5) of the second mould insert part (3), at least in the region facing towards the first mould insert part (2), are arranged to extend in an oblique manner.

12. Mould insert as claimed in any one of claims 1 to 11, **characterised in that** individual ones or all of the partial receiving holes (6) of the second mould insert part (3), at least in portions, have an angled or curved profile and the partial receiving holes (6), in an introduction region which faces away from the first mould insert part (2), are arranged in each case perpendicularly to the surface of the second mould insert part (3).

13. Mould insert as claimed in any one of claims 1 to 12, **characterised in that** the partial receiving holes (6) of the second mould insert part (3), at an introduction region thereof which faces away from the first mould insert part (2), are spaced apart at greater distances than at a region thereof which faces towards the first mould insert part (2).

14. Mould insert as claimed in any one of claims 1 to 13, **characterised in that** the partial receiving holes (6) of the second mould insert part (3) have a variation in cross-section from an introduction region thereof which faces away from the first mould insert part (2) to the region which faces towards the first mould insert part (2).

15. Mould insert as claimed in any one of claims 1 to 14, **characterised in that** the second mould insert part (3) is configured in multiple parts.

## Revendications

1. Insert de moule (1) pour un moule de coulée par injection avec une région de moule (4) pour la formation d'un corps de partie de brosse (21) et avec des trous de réception s'étendant dans la région de moule (4) pour des faisceaux de filaments (7), dans lequel l'insert de moule (1) est formé en plusieurs parties et présente une première partie d'insert de moule (2) avec la zone de moule (4) pour le corps de partie de brosse (21) et avec des trous de réception partiels (5) pour la réception locale de faisceaux de filaments (7) ainsi qu'une deuxième partie d'insert de moule (3) avec des trous de réception partiels (6) se raccordant en position d'utilisation aux trous de réception partiels (5) de la première partie d'insert de moule (2), **caractérisé en ce qu'**il est prévu sur la deuxième partie d'insert de moule (3) des tiges d'ajustage (14), qui s'engagent dans des évidements (15) de la première partie d'insert de moule (2) et peuvent être fixées dans les évidements (15), dans lequel les tiges d'ajustage (14) se composent de matière synthétique et peuvent être assemblées par fusion aux évidements (15) de la première partie d'insert de moule (2) ou dans lequel il est prévu des douilles d'ajustage (16) pour la fixation axiale des tiges d'ajustage (14) dans les évidements (15) et dans lequel il est prévu respectivement une fente pouvant être remplie avec une masse de remplissage entre la paroi intérieure de l'évidement (15) et la douille d'ajustage (16).

2. Insert de moule selon la revendication 1, **caractérisé en ce que** la deuxième partie d'insert de moule (3) se compose de matière synthétique.

3. Insert de moule selon la revendication 1 ou 2, **caractérisé en ce que** la masse de remplissage est une résine d'assemblage.

4. Insert de moule selon l'une quelconque des revendications 1 à 3, **caractérisé en ce que** la première partie d'insert de moule (2) peut être fixée à la deuxième partie d'insert de moule (3) au moyen d'une liaison par vissage.

5. Insert de moule selon l'une quelconque des revendications 1 à 4, **caractérisé en ce que** l'insert de moule (1) peut être inséré dans une cassette (12) formant un support d'inserts de moule, présentant plusieurs évidements destinés à recevoir chacun un insert de moule (1).

6. Insert de moule selon la revendication 5, **caractérisé en ce que** la première partie d'insert de moule (2) peut être assemblée de façon séparable à la cassette (12) à l'aide d'une liaison par vissage.

7. Insert de moule selon l'une quelconque des revendications 1 à 6, **caractérisé en ce que** la zone de moule (4) pour le corps de partie de brosse (21) de la première partie d'insert de moule (2) est réalisée de façon à recevoir une plaque de support de filaments (20).

8. Insert de moule selon l'une quelconque des revendications 1 à 7, **caractérisé en ce que** les trous de réception partiels (5) de la première partie d'insert de moule (2) présentent chacun un chanfrein (11) à leur extrémité tournée vers la deuxième partie d'insert de moule (3).

9. Insert de moule selon la revendication 8, caractérisé - en ce que le chanfrein (11) d'un trou de réception partiel (5) de la première partie d'insert de moule (2) est plus grand, par rapport à la direction d'extension principale du trou de réception partiel (5), que la partie restante du trou de réception partiel (5).

10. Insert de moule selon l'une quelconque des revendications 1 à 9, **caractérisé en ce que** quelques-uns ou tous les trous de réception partiels (5) de la première partie d'insert de moule (2) sont disposés en oblique.

11. Insert de moule selon l'une quelconque des revendications 1 à 10, **caractérisé en ce que** quelques ou tous les trous de réception partiels (6) de la deuxième partie d'insert de moule (3) sont disposés en oblique au moins dans la région tournée vers la première partie d'insert de moule (2).

12. Insert de moule selon l'une quelconque des revendications 1 à 11, **caractérisé en ce que** quelques ou tous les trous de réception partiels (6) de la deuxième partie d'insert de moule (3) présentent au moins localement un tracé coudé ou incurvé et **en ce que** les trous de réception partiels (6) sont chacun disposés perpendiculairement à la surface de la deuxième partie d'insert de moule (3) dans leur région d'introduction détournée de la première partie d'insert de moule (2).

13. Insert de moule selon l'une quelconque des revendications 1 à 12, **caractérisé en ce que** les trous de réception partiels (6) de la deuxième partie d'insert de moule (3) présentent, dans leur région d'introduction détournée de la première partie d'insert de moule (2), de plus grands écartements que dans leur région tournée vers la première partie d'insert de moule (2).

14. Insert de moule selon l'une quelconque des revendications 1 à 13, **caractérisé en ce que** des trous de réception partiels (6) de la deuxième partie d'insert de moule (3) présentent, depuis leur région d'introduction détournée de la première partie d'insert de moule (2) jusqu'à la région tournée vers la première partie d'insert de moule (2), un changement de leur section transversale.

15. Insert de moule selon l'une quelconque des revendications 1 à 14, **caractérisé en ce que** la deuxième partie d'insert de moule (3) est réalisée en plusieurs parties.
